# FASCICULE DE BREVET EUROPEEN

(11) **EP 1 195 539 B1**
(45) Date de publication et mention de la délivrance du brevet: **28.06.2006**
(21) Numéro de dépôt: 01402440.0
(22) Date de dépôt: 24.09.2001
(51) Int. Cl.: F16F 7/12, B60R 21/04

(54) **Dispositif d'absorption d'énergie lors d'un choc, et portière de véhicule automobile comprenant un tel dispositif**
Vorrichtung zum Absorbieren von Stossenergie und Kraftfahrzeugtür mit so einer Vorrichtung
Device absorbing shock energy and automotive vehicle door comprising such a device

(30) Priorité: 09.10.2000 FR 0012893
(43) Date de publication de la demande: 10.04.2002
(73) Titulaire: SAI AUTOMOTIVE ALLIBERT INDUSTRIE, 92748 Nanterre (FR)
(72) Inventeur: Laborie, Jean-Michel, 60114 Meru (FR); Demulder, Damien, 60114 Meru (FR); Febvay, Patrick, 60114 Meru (FR)
(74) Mandataire: Lerner, François

(56) Documents cités:
- EP-A- 0 916 277
- DE-A- 4 307 836
- FR-A- 2 758 115
- FR-A- 2 784 151
- US-A- 3 251 076
- US-A- 4 890 877
- US-A- 5 016 417

## Description

L'invéntion concerne un dispositif d'absorption d'énergie lors d'un choc. L'invention concerne plus particuliérement un dispositif d'absorption d'énergie lors d'un choc destiné à être monté dans un véhicule automobile.

Afin d'absorber l'énergie libérée par un choc latéral sur la portière d'un véhicule automobile, il est connu de placer un élément absorbeur de choc interne à la portière. Cet élément absorbeur de choc est conçu pour respecter un corridor biomécanique. On entend par corridor biomécanique un couloir défini entre une courbe supérieure et une courbe inférieure représentées dans un plan dont l'abscisse est l'enfoncement du bassin du mannequin de test dans la portière et l'ordonnée est l'effort de la portière sur le bassin du mannequin de test. Chaque constructeur défini son propre corridor biomécanique. Par exemple, chacune des deux courbes est composée d'une première droite coupant l'origine et d'une seconde droite parallèle à l'abscisse formant pallier. Si la courbe de l'élément absorbeur est supérieure à la courbe limite supérieure, alors l'élément absorbeur est trop rigide, le bassin du mannequin subira un effort trop important par rapport aux critères du constructeur automobile. Si la courbe de l'élément absorbeur est inférieure à la courbe limite inférieure alors l'élément absorbeur sera souple, mais l'important enfoncement du bassin dans la portière résultant de cette souplesse générera des conditions inadmissibles de contact de l'abdomen, du torse et de la tête du mannequin de test avec la partie supérieure de la portière.

On connaît un premier type d'élément absorbeur sous forme de bloc de mousse. L'espace interne à la portière devant être comblé par la mousse est important. La largeur à combler peut avoir typiquement 120 mm. La mousse étant une matière chère, il en résulte un coût élevé incompatible avec la plupart des catégories de véhicule.

On connait, d'après le document EP-A-0916277, un élément de semelle qui amortit les chocs. Cet élément comporte de nombreux éléments flexibles formant des colonnes entre deux feuilles extérieures.

Un autre type d'élément absorbeur repose sur des éléments plastiques injectés déformables. Dans ce type d'éléments absorbeurs, on connaît les boites nervurées. Cependant, on observe des discontinuités dans la courbe biomécanique du fait de la rupture aléatoire non-optimisée des nervures.

Dans le même type d'étément plastiques injectés déformables on connaît les boites à absorbeurs de choc coniques. Ces boites, décrites par exemple dans FR 2784151 comprennent une plaque sur laquelle se dresse une pluralité d'éléments absorbeur de choc, creux, tronconique, chaque élément absorbeur présentant une résistance à l'écrasement. L'inconvénient majeur de ces structures à éléments absorbeurs de choc conique résulte de leur hauteur trop importante (120mm), induisant un possible flambage de l'ensemble de la structure lors du choc. Un autre inconvénient de ce type de structure résulte de la condition d'angle du tronc de cône qui doit être compris entre 10 et 15 degrés pour une tenue mécanique optimisée. Du fait de la hauteur importante, les troncs de cône répondant à la condition d'angle ont une grande base très importante limitant de nombre de troncs de cône par structure.

L'un des buts de la présente invention est de proposer un dispositif d'absorption du type éléments plastiques injectés déformables, palliant les inconvénients cités ci-dessus.

Un autre but de la présente invention est de proposer un dispositif d'absorption dont la fabrication est simple et économique.

A ces effets, l'invention concerne un dispositif d'absorption d'énergie selon la revendication 1.

Avantageusement, les éléments absorbeurs ont une forme en tronc de cône.

Selon une autre caractéristique selon l'invention, la grande base des éléments absorbeurs est elliptique.

Dans un mode de réalisation, les bases des éléments absorbeurs d'une plaque sont décalées par rapport aux bases des éléments absorbeurs de l'autre plaque.

Avantageusement, le décalage est angulaire.

Dans un mode de réalisation, à chaque élément absorbeur d'une plaque correspond un élément absorbeur de l'autre plaque, coaxiaux selon un axe de choc, et décalés angulairement l'un par rapport à l'autre autour dudit axe de choc.

Afin de simplifier la fabrication et le montage, le dispositif d'absorption est monobloc de moulage, et comprend une charnière film entre les deux plaques de base en regard.

L'invention concerne aussi une portière de véhicule automobile comprenant un dispositif d'absorption d'énergie de choc disposé entre une paroi externe et une paroi interne, selon l'invention, le dispositif d'absorption d'énergie est un dispositif tel que décrit ci-dessus.

Un premier avantage de la présente invention résulte de la division du dispositif d'absorption de l'art antérieur en deux sous structures. De ce fait la hauteur des troncs de cône est divisée par deux ce qui multiplie la charge critique de flambage global par 4. Cela réduit sensiblement le risque de flambage du dispositif d'absorption en cas de choc.

Un autre avantage de la présente invention résulte de la forme ellipsoïde ou oblongue de la grande base des troncs de cône. Cette caractéristique permet de décaler les éléments absorbeurs en regard de telle sorte qu'une partie non négligeable de la périphérie de la grande base d'un des éléments absorbeurs repose sur la plaque de l'autre absorbeur.

D'autres avantages et caractéristiques de la présente invention résulteront de la description qui va suivre en référence aux dessins annexés dans lesquels:
La figure 1 est une représentation schématique en perspective d'un dispositif selon la présente invention.
La figure 2 est une représentation schématique d'un détail d'un dispositif selon la présente invention.
La figure 3 est une représentation schématique en coupe suivant la ligne III-III de la figure 2.
La figure 4 est une vue schématique en coupe d'un détail d'un dispositif selon la présente invention en sortie de moulage.
La figure 5 est une représentation schématique en coupe d'une portière selon la présente invention.

L'invention concerne un dispositif d'absorption de choc en plastique injecté. Ce dispositif d'absorption comprend deux plaques de base 2, 3 en regard et au contact l'une de l'autre, perpendiculaires à un axe de travail D dudit dispositif d'absorption. Sur chaque plaque de base 2, 3 se dressent suivant l'axe D, une pluralité d'éléments absorbeur de choc 12, 13. Les éléments absorbeurs de choc 12 d'une plaque 2, se dressent dans la direction opposée à la direction des éléments absorbeurs de choc 13 de l'autre plaque de base 3. Chaque élément absorbeur 12, 13 comprend une première base 5 localisée sur la plaque de base 2, 3, une paroi latérale 4 érigée suivant l'axe D, à partir de la première base, et une base d'extrémité 6 localisée à l'opposé de la première base 5 par rapport à la paroi latérale 4.

Chaque élément absorbeur 12, 13 présente une résistance à l'écrasement suivant l'axe D. les résistances à l'écrasement peuvent être différentes d'un élément absorbeur à l'autre. En particulier, les résistances à l'écrasement des éléments absorbeurs de choc 12, 13 sont calculées pour répondre à une cartographie d'absorption de choc préétablie dans le panneau de porte. La résistance à l'écrasement d'un élément absorbeur est notamment fonction de la forme des bases 5, 6, et de la forme et de la hauteur de la paroi latérale 4. Dans les modes de réalisation représentés sur les figures, les éléments absorbeurs de choc 12, 13 sont creux. L'épaisseur e des éléments absorbeurs 12, 13 est aussi un paramètre pour la résistance à l'écrasement.

Avantageusement, les éléments absorbeurs ont une forme en tronc de cône : les bases 5, 6 et les plaques de bases 2, 3 sont parallèles les unes aux autres, la première base 5 constituant la grande base 5 du tronc de cône.

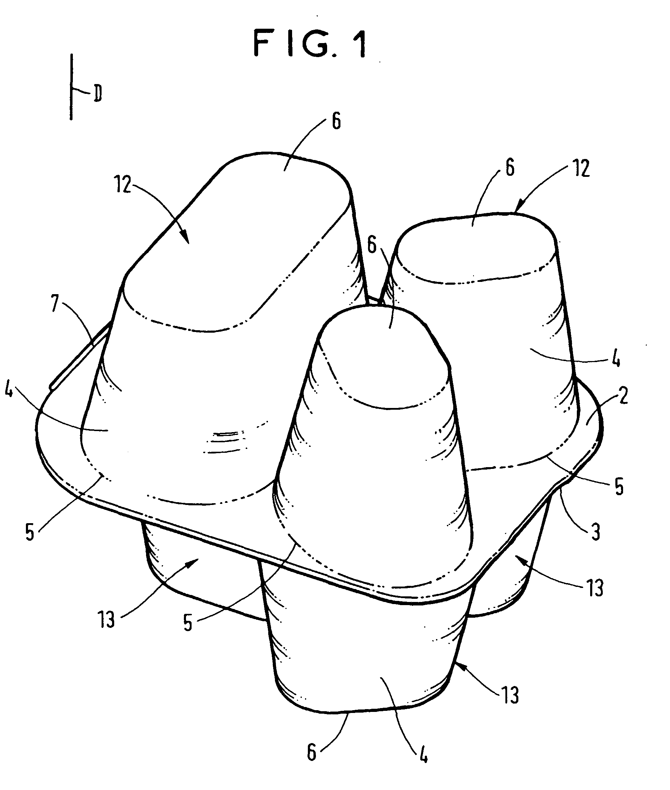

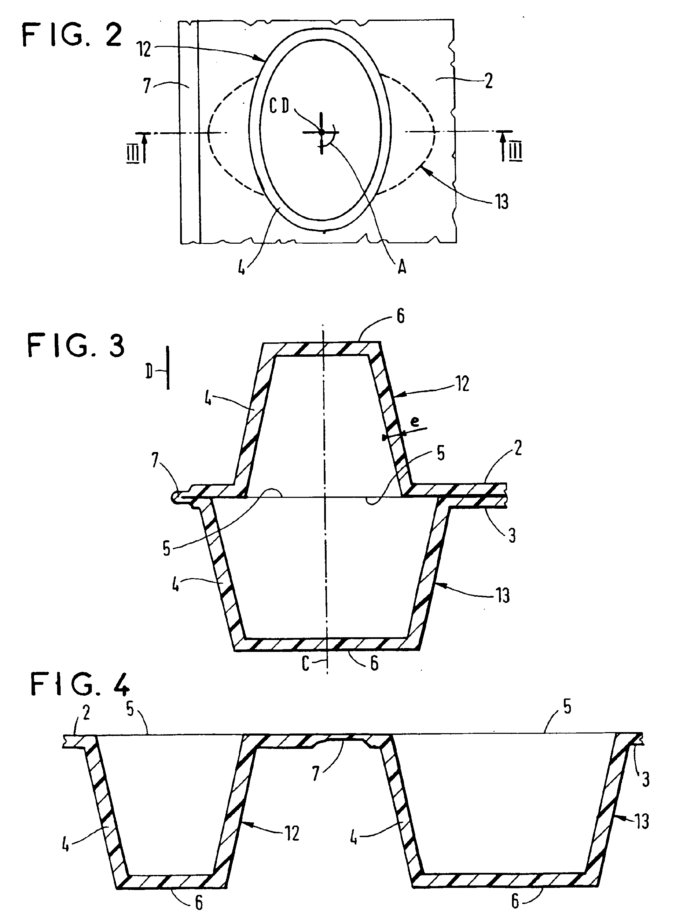

Dans la forme de réalisation représentée sur les figures, la grande base 5 des éléments absorbeurs 12, 13 a une longueur plus importante que sa largeur. La grande base 5 a par exemple une forme oblongue comme sur la figure 1 ou une forme ellipsoïde comme sur les figures 2 à 4.

Dans le mode de réalisation avec les éléments absorbeurs creux, afin d'assurer une liaison mécanique maximale entre les éléments absorbeurs 12 d'une plaque 2 et les éléments absorbeurs 13 de l'autre plaque 3, les premières bases 5 des éléments absorbeurs 12 d'une plaque 2 sont positionnées par rapport aux premières bases 5 des éléments absorbeurs 13 de l'autre plaque 3 de telle manière qu'une partie non négligeable de la périphérie de la première base 5 des éléments absorbeurs 12, 13 d'une plaque de base 2, 3 est au contact direct de l'autre plaque de base 3, 2.

Dans un mode de réalisation, au moins un élément absorbeur 12, 13 d'une plaque de base 2, 3 a un élément absorbeur 13, 12 en vis à vis direct sur l'autre plaque de base 3, 2. Pour assurer la liaison mécanique, les bases des éléments absorbeurs en regards sont décalées angulairement autour d'un axe de choc C parallèle à l'axe D.

Dans le mode de réalisation représenté sur les figures, à chaque élément absorbeur d'une plaque correspond un élément absorbeur de l'autre plaque. Ces éléments absorbeurs sont coaxiaux selon leur axe de choc C, et décalés selon un angle A l'un par rapport à l'autre autour dudit axe de choc C. les plaques de base sont solidaires l'une de l'autre.

Avantageusement, les éléments absorbeurs en regard ont les mêmes forme et dimension et sont décalés d'un quart de tour l'un par rapport à l'autre.

Le dispositif d'absorption selon l'invention peut avantageusement être moulé de façon monobloc, et comprend une charnière film 7 entre les deux plaques de base 2, 3 en regard. La matière utilisée peut être toute matière plastique moulable, chargée ou non.

La fabrication et le montage du dispositif est alors le suivant :

On moule en une fois et de façon monobloc les deux plaques de base 2, 3 et l'ensemble des éléments absorbeurs 12, 13 dans une position ouverte. Les deux plaques de base 2, 3 sont liées l'une à l'autre par une charnière film 7. Un détail de la pièce plastique résultante est représentée figure 4.

On rabat les deux plaques de base 2, 3 l'une sur l'autre par pivotement autour de la charnière film 7.

On solidarise l'une à l'autre les deux plaques de bases en regard. Tout moyen connu de solidarisation des plaques de base entre-elles peut être utilisé comme notamment le collage, le soudage, le rivetage, le clipage, etc. les plaques de bases sont avantageusement solidarisées entre elles pour les maintenir en position rabattue, et pour bloquer tout glissement de l'une sur l'autre.

L'invention concerne aussi une portière de véhicule automobile comprenant un dispositif d'absorption d'énergie de choc 100 disposé entre une paroi externe 20 et une paroi interne 21, selon l'invention, le dispositif d'absorption d'énergie 100 est un dispositif tel que décrit ci-dessus.

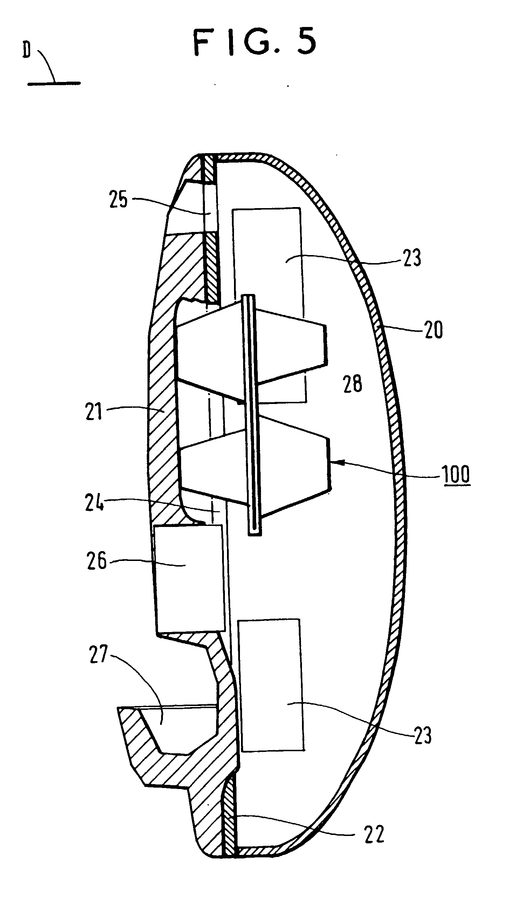

La figure 5 représente une vue schématique en coupe d'une portière selon l'invention. La portière comprend une tôle extérieure 20, une tôle intermédiaire 22 et un porteur intérieur 21. Le dispositif d'absorption d'énergie de choc 100 est fixé au porteur intérieur 21 par tous moyen connu (bouteroller, souder, cliper, coller, etc...). La tôle intermédiaire présente une ouverture 24 permettant le passage du dispositif d'absorption d'énergie de choc 100. Le dispositif d'absorption d'énergie de choc 100 est laissé libre du coté de la tôle extérieure 20. L'espace 28 laissé entre le dispositif d'absorption d'énergie de choc 100 et de la tôle extérieure 20 est nécessaire pour le passage de la vitre de la portière.

Bien entendu, la présente invention n'est pas limitée aux exemples de réalisation représentés. De multiples variations sont réalisables sans qu'elles ne sortent du cadre de la présente invention.

## Revendications

1. Dispositif d'absorption d'énergie lors d'un choc, comprenant une pluralité d'éléments absorbeurs de choc creux (12, 13) ayant une première base (5), une surface latérale (4) et une base d'extrémité (6), chaque élément absorbeur (12, 13) présentant une résistance à l'écrasement selon un axe de travail (D), **caractérisé en ce qu'**il comprend deux plaques de base (2, 3) en regard et au contact l'une de l'autre, sur chaque plaque (2, 3) se dressant, selon l'axe de travail (D), les surfaces latérales (4) de plusieurs éléments absorbeurs de choc creux (12, 13), les surfaces latérales (4) des éléments absorbeurs de choc (12, 13) d'une plaque de base (2, 3), se dressant dans une direction opposée aux surfaces latérales (4) des éléments absorbeurs de choc (13, 12) de l'autre plaque de base (3, 2).

2. Dispositif selon la revendication 1, **caractérisé en ce que** les éléments absorbeurs creux (12, 13) ont une forme en tronc de cône.

3. Dispositif selon la revendication 1 et 2, **caractérisé en ce que** la première base (5) des éléments absorbeurs (12, 13) est de forme générale allongée.

4. Dispositif selon l'une quelconque des revendication 1 à 3, **caractérisé en ce que** les premières bases (5) des éléments absorbeurs (12, 13) d'une plaque de base (2, 3) sont décalées par rapport aux premières bases (5) des éléments absorbeurs (13, 12) de l'autre plaque de base (3, 2).

5. Dispositif selon la revendication 4, **caractérisé en ce que** le décalage est un décalage angulaire autour d'un axe de choc (C) parallèle à l'axe de travail (D).

6. Dispositif selon la revendication 4 ou 5, **caractérisé en ce qu'**à chaque élément absorbeur (12, 13) d'une plaque de base (2, 3) correspond un élément absorbeur (13, 12) de l'autre plaque de base (3,2), coaxiaux selon l'axe de choc (C) parallèle à l'axe de travail (D) et décalés angulairement l'un par rapport à l'autre autour dudit axe de choc (C).

7. Dispositif selon l'une quelconque des revendication 1 à 6, **caractérisé en ce qu'**il est en matière plastique moulée, chargée ou non chargée, monobloc de moulage, et comprend une charnière film (7) entre les deux plaques de base (2, 3) en regard.

8. Portière de véhicule automobile comprenant un dispositif d'absorption d'énergie de choc (100) disposé entre une paroi externe (20) de la portière et une paroi interne (21) de la portière, **caractérisé en ce que** le dispositif d'absorption d'énergie (100) est un dispositif selon l'une quelconque des revendications 1 à 7.

## Claims

1. Device for absorbing energy during impact, comprising a plurality of hollow impact-absorbing elements (12, 13) having a first base (5), a side surface (4) and an end base (6), each absorbing element (12, 13) having a crushing resistance in the direction of a working axis (D), **characterised in that** it comprises two base plates (2, 3) which face one another and which are in contact with one another, the side surfaces (4) of several hollow impact-absorbing elements (12, 13) rising from each plate (2, 3) in the direction of the working axis (D), and the side surfaces (4) of the impact-absorbing elements (12, 13) of one base plate (2, 3) rising in a direction opposite that of the side surfaces (4) of the impact-absorbing elements (13, 12) of the other base plate (3, 2).

2. Device according to claim 1, **characterised in that** the hollow absorbing elements (12, 13) have a frustoconical shape.

3. Device according to claims 1 and 2, **characterised in that** the first base (5) of the absorbing elements (12, 13) is of a generally elongate shape.

4. Device according to any one of claims 1 to 3, **characterised in that** the first bases (5) of the absorbing elements (12, 13) of one base plate (2, 3) are offset relative to the first bases (5) of the absorbing elements (13, 12) of the other base plate (3, 2).

5. Device according to claim 4, **characterised in that** the offset is an angular offset about an impact axis (C) parallel with the working axis (D).

6. Device according to claim 4 or 5, **characterised in that** each absorbing element (12, 13) of one base plate (2, 3) corresponds to an absorbing element (13, 12) of the other base plate (3, 2), the absorbing elements being coaxial in the direction of the impact axis (C) parallel with the working axis (D) and being offset angularly relative to one another about said impact axis (C).

7. Device according to any one of claims 1 to 6, **characterised in that** it is produced from moulded plastics material, with or without filler, and moulded in a single piece, and comprises a film hinge (7) between the two facing base plates (2, 3).

8. Motor vehicle door comprising a device for absorbing impact energy (100) arranged between an outer wall (20) of the door and an inner wall (21) of the door, **characterised in that** the energy-absorption device (100) is a device according to any one of claims 1 to 7.

## Patentansprüche

1. Vorrichtung zum Absorbieren von Stoßenergie mit einer Vielzahl von hohlen Stoßabsorptionselementen (12, 13), die eine erste Basis (5), eine seitliche Oberfläche (4) und eine Endbasis (6) haben, wobei jedes Absorptionselement (12, 13) einen Druckwiderstand entlang einer Arbeitsachse (D) aufweist, **dadurch gekennzeichnet, daß** sie zwei Basisplatten (2, 3) einander gegenüber und in Kontakt miteinander aufweist, wobei sich auf jeder Platte (2, 3) entlang der Arbeitsachse (D) die seitlichen Oberflächen (4) mehrerer hohler Stoßabsorptionselemente (12, 13) erheben, und sich die seitlichen Oberflächen (4) der Stoßabsorptionselemente (12, 13) einer Basisplatte (2, 3) in einer Richtung entgegengesetzt zu den seitlichen Oberflächen (4) der Stoßabsorptionselemente (13, 12) der anderen Basisplatte (3, 2) erheben.

2. Vorrichtung nach Anspruch 1, **dadurch gekennzeichnet, daß** die hohlen Absorptionselemente (12, 13) eine Kegelstumpfform haben.

3. Vorrichtung nach Anspruch 1 und 2, **dadurch gekennzeichnet, daß** die erste Basis (5) der Absorptionselemente (12, 13) eine allgemein längliche Form hat.

4. Vorrichtung nach einem der Ansprüche 1 bis 3, **dadurch gekennzeichnet, daß** die ersten Basen (5) der Absorptionselemente (12, 13) einer Basisplatte (2, 3) bezüglich der ersten Basen (5) der Absorptionselemente (13, 12) der anderen Basisplatte (3, 2) verschoben sind.

5. Vorrichtung nach Anspruch 4, **dadurch gekennzeichnet, daß** die Verschiebung eine winkelige Verschiebung um eine Stoßachse (C) parallel zu der Arbeitsachse (D) ist.

6. Vorrichtung nach Anspruch 4 oder 5, **dadurch gekennzeichnet, daß** jedem Absorptionselement (12, 13) einer Basisplatte (2, 3) ein Absorptionselement (13, 12) der anderen Basisplatte (3, 2) entspricht, die entlang der Stoßachse (C) parallel zu der Arbeitsachse (D) koaxial und winkelig zueinander um die Stoßachse (C) verschoben sind.

7. Vorrichtung nach einem der Ansprüche 1 bis 6, **dadurch gekennzeichnet, daß** sie aus geformtem, beladenem oder nicht-beladenem Kunststoffmaterial aus einem Formstück besteht und zwischen den zwei gegenüberliegenden Basisplatten (2, 3) einen Scharnierfilm (7) aufweist.

8. Kraftfahrzeugtür mit einer Vorrichtung zum Absorbieren von Stoßenergie (100), die zwischen einer Außenwand (20) der Tür und einer Innenwand (21) der Tür angeordnet ist, **dadurch gekennzeichnet, daß** die Vorrichtung zum Absorbieren der Energie (100) eine Vorrichtung nach einem der Ansprüche 1 bis 7 ist.
